# FASCICULE DE BREVET EUROPEEN

(11) **EP 1 721 502 B1**
(45) Date de publication et mention de la délivrance du brevet: **19.03.2014**
(21) Numéro de dépôt: 06113740.2
(22) Date de dépôt: 10.05.2006
(51) Int. Cl.: A01C 17/00

(54) **Dispositif d'épandage centrifuge d'un produit pulvérulent ou granulaire**
Schleuderstreuer für körniges oder pulverförmiges Gut
Centrifugal spreader for spreading granular and/or pulverulent material

(30) Priorité: 13.05.2005 FR 0504807
(43) Date de publication de la demande: 15.11.2006
(73) Titulaire: SULKY-BUREL, 35220 Chateaubourg (FR)
(72) Inventeur: CLOCHARD, Daniel, 35113, DOMAGNE (FR); PIRON, Emmanuel, 03300, CREUZIER LE VIEUX (FR)
(74) Mandataire: Regimbeau

(56) Documents cités:
- EP-A- 0 330 920
- EP-A- 0 384 132
- EP-A- 0 611 264
- EP-A- 0 981 939
- EP-A- 1 208 733

## Description

La présente invention concerne un dispositif d'épandage centrifuge d'un produit pulvérulent ou granulaire sur un sol.

Comme applications classiques, mais non limitatives, d'un tel dispositif on peut citer notamment l'épandage d'engrais sur un terrain agricole et l'épandage de sable ou de sel sur une chaussée verglacée.

Le dispositif, mobile, est monté à l'arrière d'un véhicule par lequel il est porté ou tracté, par exemple un tracteur agricole.

Plus précisément, le dispositif est du type comprenant au moins un disque rotatif d'axe vertical, ou voisin de la verticale, des moyens d'amenée du produit sur ce disque, par exemple sous la forme d'un flux de matière tombant en continu sur une zone déterminée de la face supérieure du disque, au moins une pale distributrice fixée sur cette dernière et dont une portion d'extrémité interne, dite amont, est apte à intercepter le flux de matière alimentant le disque, cette pale étant adaptée pour canaliser et diriger le produit pulvérulent ou granulaire ainsi intercepté vers son extrémité opposée externe, dite aval, et pour l'éjecter à l'extérieur du disque sous l'effet de la force centrifuge.

La pale s'étend selon une direction approximativement radiale sur le disque.

L'état de la technique en ce domaine peut être illustré par exemple par les documents US 3 085 807, FR 2 450 551, EP 0 170 605, EP 0 820 689 et EP 0 489 674.

En général le dispositif comporte deux disques placés côte à côte et tournant en sens inverses.

Chaque disque comporte généralement plus d'une pale, par exemple deux, trois ou quatre pales, voire plus, dont les longueurs peuvent être égales ou différentes.

Ainsi , il est relativement usuel d'utiliser une paire de disques pourvus chacun d'une pale courte et d'une pale longue, comme illustré par exemple sur la figure 3 du document EP 0 820 689 précité.

L'axe de symétrie du disque, qui coïncide avec son axe de rotation, n'a pas forcément une disposition strictement verticale ; dans certains dispositifs cet axe est légèrement oblique.

De même, le disque n'est pas forcément plan. Certains dispositifs utilisent des disques en forme générale d'assiette (voir par exemple la figure 3 du FR 2 450 551 précité) et leurs pales sont légèrement inclinées, en tout ou partie, vers le haut et vers l'extérieur.

On ne sortirait pas du cadre de la présente invention en recourant à de tels agencements.

Une pale est généralement un profilé rectiligne, ayant une section sensiblement en forme de « E » dépourvu de sa branche centrale, dont la paroi correspondant à la branche horizontale inférieure est fixée sur le disque, la paroi correspondant à la branche verticale ayant pour fonction de retenir et de guider les granulés d'une extrémité à l'autre de la pale, tandis que la paroi correspondant à la branche horizontale supérieure (en général moins large que la branche horizontale inférieure) empêche l'échappement intempestif des granulés vers le haut avant qu'ils n'aient atteint la portion d'extrémité externe de la pale.

L'ouverture de ce « E » dépourvu de branche centrale est tournée vers l'avant, si on considère le sens du déplacement de la pale, induit par la rotation du disque.

La demanderesse commercialise des dispositifs d'épandage du genre mentionné dont les pales correspondent à celles représentées dans le EP 0 820 689 (référencées 2A et 2B sur la figure 1). Une telle pale possède une portion d'extrémité externe (ou aval) échancrée, sa partie terminale ayant une section similaire de celle du reste de la pale, mais de hauteur plus faible, sa branche horizontale supérieure se positionnant en vis-à-vis de la zone médiane de la branche verticale de la partie principale interne (ou amont).

Grâce à cette structure particulière, les granulés transportés le long de la moitié inférieure de la paroi verticale de la pale sont éjectés plus tard que ceux qui sont transportés le long de sa moitié supérieure.

Il en résulte un décalage du point d'éjection (suivant la trajectoire circonférentielle) ainsi qu'une différence de la direction et de la vitesse d'éjection (directement liées à la longueur de la pale), selon que le granulé a suivi une trajectoire basse ou haute sur la pale.

En pratique, il y a une superposition partielle au sol des deux nappes de granulés, ce qui améliore notablement l'homogénéité de la répartition du produit.

Ce type de pale donne donc satisfaction dans la plupart des applications.

Cependant, lors d'un épandage dit « de précision », auquel on travaille à faible dosage, c'est-à-dire avec un faible débit de flux distribué sur le disque et/ou avec une faible vitesse de rotation, il arrive que les granulés ont tendance à monter, ou, au contraire, à descendre sur la face de la paroi arrière de la pale au cours de leur cheminement le long de celle-ci.

En conséquence, la totalité ou la quasi-totalité des granulés s'échappe par l'une des deux sorties de pale (la haute ou la basse), si bien que la répartition du produit au sol n'est pas homogène.

Une autre difficulté rencontrée avec ce genre de pale, avec des débits forts ou moyens, est que le flux de granulés qui s'échappe en premier, par la sortie « haute » percute le bord interne de la paroi supérieure de la partie terminale de la pale, ce qui provoque un éclatement du flux, néfaste à une bonne répartition et cause d'usure prématurée de la pale à ce niveau.

Comme cela est connu, notamment par le document EP-A-0 611 264 commenté ci-après, la pale est subdivisée en au moins deux canaux superposés d'inégales longueurs séparés par une cloison longitudinale et horizontale, ou approximativement horizontale. Conformément à l'invention, d'une part, cette cloison s'étend depuis le bord d'extrémité amont de la pale jusqu'à l'extrémité aval du canal le plus court, et est ainsi configurée et dimensionnée qu'elle est apte à couper « au vol », par sa partie amont, le flux de matière alimentant le disque et, d'autre part, la partie aval de la pale qui s'étend au-delà du canal le plus court est ainsi conformée qu'elle ne fait pas obstacle à l'éjection du flux de matière hors de ce dernier.

Ainsi, dès son arrivée -ou juste avant son arrivée- sur le disque tournant, le produit est intercepté et divisé en au moins deux parties, l'une étant prise en charge par le canal supérieur et l'autre par le canal inférieur ; la présence de la cloison médiane horizontale empêche les granulés de passer d'un canal à l'autre au cours de leur transfert vers l'extrémité libre (externe) de la pale.

Chacune des sorties décalées, haute et basse, débite donc un flux donné de produit, ce qui permet d'obtenir l'homogénéité voulue, même à très faible dosage. Avantageusement, ladite cloison s'étend (vers l'intérieur du disque) jusqu'au bord de la portion d'extrémité amont de la pale jusqu'à l'extrémité aval du canal le plus court.

De plus, comme il n'y a pas d'obstacle sur la trajectoire des granulés au-delà de cette extrémité, le problème de collision des granulés et d'éclatement de leur flux se trouve également éliminé.

A cet égard, il convient de citer comme élément de l'état de la technique le document EP -A- 0611 264.

Il décrit une pale de forme particulière comprenant deux parties superposées qui divergent légèrement de leur extrémité amont (interne) vers leur extrémité aval (externe), formant entre elles, vues de dessus, un angle aigu.

Leur paroi verticale présente en outre une ondulation longitudinale de profondeur croissante vers l'extérieur.

On observera néanmoins que la paroi verticale de la pale, dans sa portion d'extrémité amont, possède une face plane dépourvue de cloisonnement ou d'ondulation, et qu'elle est incapable par conséquent de subdiviser en deux parties distinctes (ou plus) un flux de produit distribué sur le disque devant cette portion d'extrémité amont. De plus, la portion externe (ou aval) dépassante de la pale présente une languette horizontale - référencée 6 dans ce document- qui constitue un obstacle directement exposé au flux s'échappant de la partie supérieure, ce qui est contraire à l'un des objectifs recherchés.

L'invention a pour objectif de résoudre ces problèmes.

L'invention concerne un dispositif selon la revendication 1.

Par ailleurs, selon un certain nombre de caractéristiques avantageuses, mais non limitatives, de l'invention :
- la pale consiste en un profilé présentant, côté amont, une partie principale dont la section droite, sensiblement constante, présente la forme approximative de la lettre **E**, dont la paroi correspondant à la branche inférieure est fixée sur le disque, tandis que la paroi correspondant à la branche verticale est divisée en deux faces superposées et coplanaires séparées par ladite cloison ;
- la pale consiste en un profilé présentant, côté aval, au-delà du canal le plus court, une partie d'extrémité dont la section droite, sensiblement constante, présente la forme approximative de la lettre **L** dont la branche verticale est munie, en partie supérieure, d'un rebord (400) qui est tourné du même côté que sa branche inférieure horizontale;
- la cloison a sensiblement la forme d'un dièdre dont l'arête est disposée horizontalement, ou sensiblement horizontalement, et est tournée vers l'avant, si on considère le sens de rotation de la pale ;
- les bords aval des deux canaux sont décalés et étagés, de sorte que l'extrémité aval de la pale a un profil en escalier ;
- les bords aval des deux canaux sont obliques, d'inclinaison dirigée vers le bas et vers l'extérieur du disque;
- la pale a une structure télescopique, dont la portion d'extrémité s'étendant côté aval, au-delà du canal le plus court, est extensible, de longueur ajustable ;
- la portion d'extrémité de la pale qui s'étend côté aval, au-delà du canal le plus court, est inclinée vers le haut et vers l'extérieur d'un angle aigu, et est apte à projeter, avec une composante dirigée vers le haut, le produit s'échappant du canal le plus long ;
- la valeur de cet angle aigu est réglable ;
- la cloison est articulée sur la pale, de sorte que son inclinaison par rapport à la direction horizontale est ajustable ;
- la pale est subdivisée en trois canaux superposés d'inégales longueurs séparés deux à deux par une paire de cloisons horizontales, ou approximativement horizontales.
- la pale consiste en un profilé fabriqué par découpage et pliage d'une tôle, ce profilé étant subdivisé en au moins deux canaux superposés d'inégales longueurs séparés par une cloison longitudinale, et possédant :
- côté amont, une partie principale dont la section droite, sensiblement constante, présente la forme approximative de la lettre E, dont la paroi correspondant à la branche inférieure est fixée sur le disque,
- côté aval, au-delà du canal le plus court, une partie d'extrémité dont la section droite, sensiblement constante, présente la forme approximative de la lettre L dont la branche verticale est munie, en partie supérieure, d'un rebord (400) qui est tourné du même côté que sa branche inférieure horizontale ;
ladite cloison ayant sensiblement la forme d'un dièdre dont l'arête, disposée horizontalement, ou sensiblement horizontalement, est tournée vers l'avant, si on considère le sens de rotation de la pale, cette cloison s'étendant depuis le bord de la portion d'extrémité amont de la pale jusqu'à l'extrémité aval du canal le plus court.

Cette pale est d'un prix de fabrication relativement faible tout en étant extrêmement performante et fiable eu égard à sa fonction.

Un même outillage peut être utilisé, en tout ou partie, pour découper et former la tôle en vue de fabriquer des pales de dimensions (et notamment de longueur) différentes, ce qui est intéressant pour une fabrication en série.

D'autres caractéristiques et avantages de l'invention apparaîtront de la description qui va maintenant en être faite, en référence aux dessins annexés, sur lesquels:
La figure 1 est une vue de dessus schématique d'un disque constitutif d'un dispositif conforme à l'invention ;
La figure 2 est une vue schématique, en perspective, de l'une des pales montées sur ce disque ;
Les figures 3A et 3B sont des sections droites de la pale au niveau des plans de coupe désignés **A-A** et, respectivement, **B-B** sur la figure 2 ;
Les figures 4 à 8 sont des vues en perspective similaires à celle de la figure 2, qui représentent cinq variantes possibles de la pale.

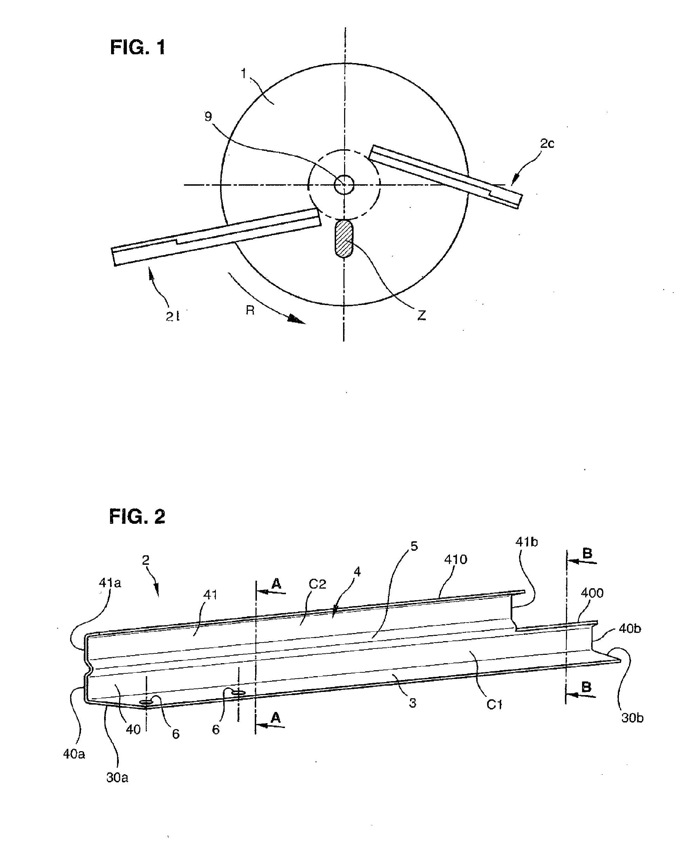

Sur la figure 1, on a désigné le disque par la référence 1 ; il est entraîné en rotation autour de son axe vertical 9 par des moyens connus non représentés, à vitesse continue et constante, de valeur réglable.

Son sens de rotation est symbolisé par la flèche **R.**

Toujours de manière connue, ce disque rotatif est surplombé d'une réserve, telle qu'une trémie, contenant le matériau granulaire ou pulvérulent à épandre. Des organes de distribution et de dosage appropriés, également de type connu, permettent de délivrer le produit hors de la réserve, de sorte qu'il s'écoule par gravité sous forme d'un flux descendant, par exemple de section ovale, et qui se dépose continûment en une zone **Z** de la face supérieure du disque tournant 1.

La position de cette zone est éventuellement réglable.

Les différents organes de distribution et de dosage précités, très largement connus de l'homme du métier, ne sont pas exposés en détail dans la présente description, ni ne sont représentés sur les dessins, afin de ne pas les alourdir inutilement.

De façon usuelle, une paire de pales d'épandage centrifuge, l'une courte 2c, et l'autre longue 21, sont fixées sur la face supérieure du disque, à l'opposé l'une de l'autre par rapport au centre du disque ; elles ont une orientation approximativement radiale, leur positionnement étant éventuellement ajustable.

Leur portion d'extrémité interne (ou amont), située à proximité du centre, est adaptée pour balayer à chacun de leur passage la zone **Z** de manière à intercepter le flux de produit qui chute sur le disque 1.

Leur portion d'extrémité opposée (aval) s'étend vers l'extérieur, au-delà du bord du disque 1.

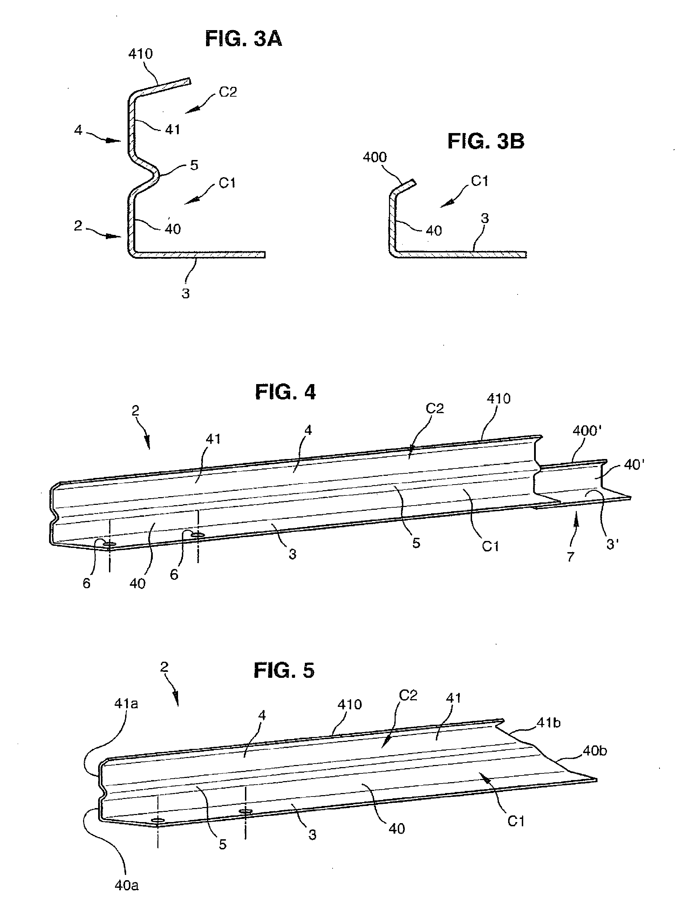

En nous reportant aux figures 2, 3A et 3B, nous allons maintenant décrire l'une de ces pales, référencée 2. Il peut s'agir indifféremment de la longue ou de la courte, lesquelles peuvent avantageusement avoir la même configuration.

Il s'agit d'un profilé métallique rectiligne, en tôle découpée et repliée, par exemple en acier inoxydable.

Sa partie principale, située côté aval, courant sur une grande partie de sa longueur (à titre indicatif: des trois quarts aux quatre cinquièmes environ de sa longueur totale), possède une section droite constante, représentée sur la figure 3A.

Cette partie a la forme approximative de la lettre latine « **E** », ou de la lettre grecque « E » (Epsilon) ; elle comprend une paroi plane horizontale 3, ou embase, par laquelle elle est fixée de manière usuelle, par exemple au moyen de vis (non représentées) traversant des trous de fixation 6 percés dans cette embase. Elle comporte une paroi arrière verticale 4 et un rebord supérieur 410 tourné du même côté que la paroi inférieure 3, mais moins large et légèrement incliné vers le haut.

En sa partie centrale, la paroi 4 présente un repli 5 formant approximativement un dièdre dont l'arête - non vive, mais arrondie par suite du formage par pliage de la tôle- est disposée horizontalement et est également tournée du même côté que la paroi inférieure 3, ce côté (vers la droite de la figure 3A) correspondant au côté avant, si on considère le sens d'avancement de la pale.

Le repli 5 constitue une cloison qui délimite deux canaux superposés bas C1 et haut C2, dont les fonds 40, respectivement 41, coplanaires, sont des parties de la paroi **4.**

La cloison 5 a une largeur nettement plus faible que celle de l'embase 3.

Les bords verticaux amont 40a, 41a, des fonds 40, respectivement 41, sont dans le prolongement l'un de l'autre.

Leurs bords verticaux aval 40b, 41b, sont en revanche décalés en direction longitudinale car le canal C1 inférieur est plus long que le canal C2 supérieur.

La figure 3B montre la forme, approximativement en « **L** », de la portion d'extrémité extérieure de la pale 2 qui s'étend au-delà du bord 41b.

Les parois 3 et 40 sont inchangées.

Cette portion comporte un rebord supérieur incliné 400 similaire au rebord 410 de la partie principale, mais de plus faible largeur, formée en fait par le prolongement de la face inférieure du dièdre constitutif de la cloison 5.

En fonctionnement, à chaque tour du disque, le passage de la portion amont de la pale dans le flux de produit au niveau de la zone Z a pour effet de couper ce flux en deux « tranches » distinctes qui sont captées chacune par un canal C1 ou C2.

Les vitesses de rotation du disque 1 et de descente du produit sont régulées pour que l'autre pale agisse aussitôt, et de manière similaire, sur la portion suivante du flux pour la scinder en deux « tranches » distinctes qui sont captées chacune par un canal.

Dans chaque canal C1 ou C2, les granulés sont plaqués contre le fond correspondant 40 ou 41, qu'ils parcourent en y glissant sur toute sa longueur.

La présence de la cloison 5 empêche le produit contenu dans le canal 40 de remonter dans le canal 41 et, inversement, le produit contenu dans le canal 41 de redescendre dans le canal 40, ceci même à faible dosage.

Ainsi on est assuré qu'une certaine quantité de produit est éjectée à l'extrémité du canal supérieur C2, plus court, et une autre quantité à l'extrémité du canal inférieur C1, plus long, conformément à l'objectif recherché.

De plus, aucun obstacle mécanique ne se trouve sur le trajet des granulés qui s'échappent du canal C2.

Sur la variante de la figure 4, la pale 2 est composée de deux parties distinctes ; l'extrémité du canal C1 qui s'étend vers l'aval au-delà du canal C2 est matérialisée par un tronçon télescopique 7 coulissant et ajustable en longueur à l'aide de moyens de montage usuels.

La section droite de ce tronçon, comprenant une embase 3', un fond 40' et un rebord supérieur 400', est similaire à celle du canal C1 du mode de réalisation précédent.

En modifiant le degré d'extension de la partie 7, il est possible de faire varier le spectre de recouvrement des produits projetés par les deux canaux.

Sur la variante de la figure 5 les bords d'extrémité aval 40b, 41b, des canaux C1, respectivement C2, sont disposés obliquement, dans le prolongement l'un de l'autre.

La différence de longueur des deux canaux résulte de cette obliquité.

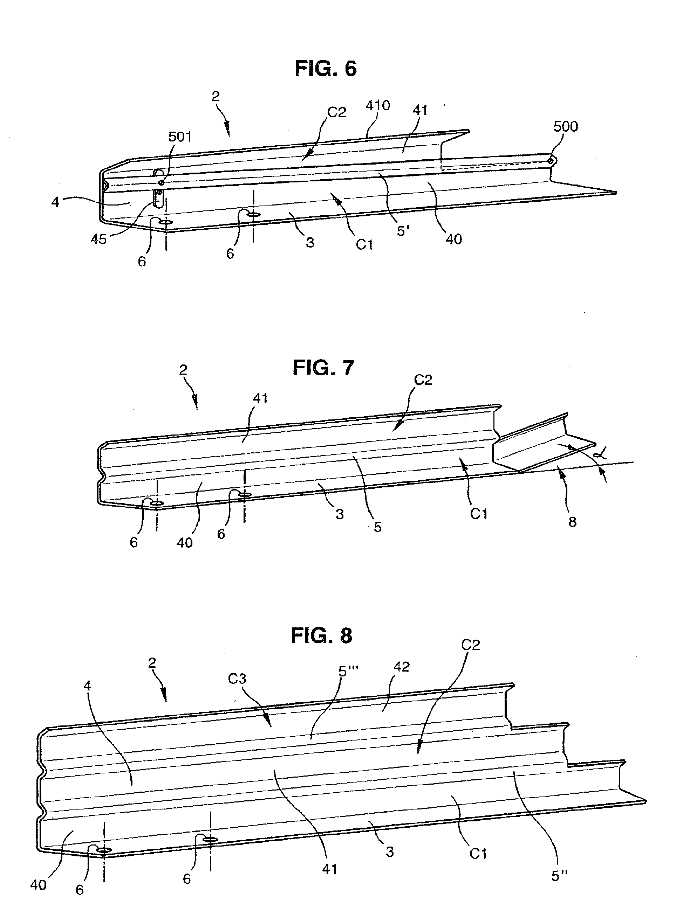

Sur la variante de la figure 6, la cloison 5' séparant les deux canaux C1 et C2 est orientable.

Elle est articulée à l'extrémité aval de la pale sur un tourillon 500.

Dans sa portion d'extrémité amont elle porte un téton 501 susceptible de coulisser et d'être bloquée dans une lumière approximativement verticale 45. Il est ainsi possible de donner à l'un des canaux (par exemple C1) une forme convergente et à l'autre une forme divergente, et ainsi privilégier le débit du produit capté et canalisé par le canal convergent (C1) en amenuisant le débit de l'autre (C2).

Sur la variante de la figure 7, l'extrémité du canal C1 qui s'étend au-delà du canal C2 est matérialisée par un tronçon 8 incliné vers le haut, d'un angle aigu α, ce qui permet de conférer au produit qui s'échappe du canal long une composante ascensionnelle.

A titre indicatif, l'angle α a une valeur, éventuellement réglable, comprise entre 5 et 30 degrés, par exemple de l'ordre de 15 degrés.

La variante de la figure 8 est analogue à celle de la figure 2, à la différence que sa paroi de fond est composé de trois plages superposées 40, 41 et 42 de longueurs décroissantes, séparées deux à deux par une paire de cloisons 5", 5"' similaires à la cloison 5.

Cette pale 2 comporte donc trois canaux superposés C1, C2 et C3 permettant d'intercepter et de canaliser trois flux de produits, ce qui améliore encore l'homogénéité de la répartition.

Au lieu d'avoir, comme la pale de la figure 2, un bord externe ayant un profil en marches d'escalier, cette pale pourrait naturellement posséder un bord oblique similaire à celui de la variante de la figure 5.

Le canal court n'est pas forcément situé au dessus du canal long comme c'est le cas pour les pales des figures 2 et 4 à 7 ; le contraire est possible.

Le nombre de canaux prévu sur une pale pourrait être supérieur à trois ; les différents couloirs n'ont pas nécessairement la même hauteur.

L'extrémité aval de la pale pourrait avoir des bords à la fois obliques (comme sur la figure 5) et décalés (comme sur la figure 2).

Au sein d'un même dispositif, à un ou deux disques, le disque peut être muni à la fois d'une ou plusieurs pales à plusieurs canaux, conformes à l'invention, et d'une ou plusieurs pales traditionnelles, sans que le dispositif ne sorte pour cela du cadre de l'invention tel que définie dans les revendications suivantes.

## Revendications

1. Dispositif d'épandage centrifuge d'un produit pulvérulent ou granulaire sur un sol, tel que de l'engrais sur un terrain cultivé, qui comprend un disque rotatif (1) d'axe (9) vertical, ou voisin de la verticale, des moyens d'amenée du produit qui s'écoule par gravité sous forme d'un flux descendant de manière à se déposer continûment en une zone déterminée (Z) de la face supérieure du disque (1), au moins une pale distributrice (2) fixée sur cette dernière et dont une portion d'extrémité interne, dite amont, est apte à intercepter le flux de matière alimentant le disque, cette pale étant adaptée pour canaliser et diriger le produit pulvérulent ou granulaire ainsi intercepté vers son extrémité opposée externe, dite aval, et pour l'éjecter à l'extérieur du disque sous l'effet de la force centrifuge, ladite pale (2) étant subdivisée en au moins deux canaux superposés d'inégales longueurs (C1, C2) séparés par une cloison (5) longitudinale et horizontale, ou approximativement horizontale, **caractérisé par le fait que**, d'une part, cette cloison (5) s'étend depuis le bord d'extrémité amont de la pale (2) jusqu'à l'extrémité aval du canal (C2) le plus court, et est apte à couper « au vol », par sa partie amont, le flux de matière alimentant le disque et que, d'autre part, la partie aval de la pale (2) qui s'étend au-delà du canal le plus court (C2) est ainsi conformée qu'elle ne fait pas obstacle à l'éjection du flux de matière hors de ce dernier.

2. Dispositif selon la revendication 1, **caractérisé par le fait que** ladite pale consiste en un profilé présentant, côté amont, une partie principale dont la section droite, sensiblement constante, présente la forme approximative de la lettre E, dont la paroi (3) correspondant à la branche inférieure est fixée sur le disque (1), tandis que la paroi (4) correspondant à la branche verticale est divisée en deux faces superposées (40, 41) séparées par ladite cloison (5).

3. Dispositif selon la revendication 1 ou 2, **caractérisé par le fait que** ladite pale consiste en un profilé présentant, côté aval, au-delà du canal (C2) le plus court, une partie d'extrémité dont la section droite, sensiblement constante, présente la forme approximative de la lettre L, dont la branche verticale est munie, en partie supérieure, d'un rebord (400) qui est tourné du même côté que sa branche inférieure horizontale.

4. Dispositif selon la revendication 2 ou 3, **caractérisé par le fait que** ladite cloison (5) a sensiblement la forme d'un dièdre dont l'arête est disposée horizontalement, ou sensiblement horizontalement, et est tournée vers l'avant, si on considère le sens de rotation de la pale (2).

5. Dispositif selon l'une des revendications 1 à 4, **caractérisé par le fait que** les bords aval (40b, 41b) des deux canaux (C1, C2) sont décalés et étagés, de sorte que l'extrémité aval de la pale (2) a un profil en escalier.

6. Dispositif selon l'une des revendications 1 à 4, **caractérisé par le fait que** les bords aval (40b, 41b) des deux canaux (C1, C2) sont obliques, d'inclinaison dirigée vers le bas et vers l'extérieur du disque.

7. Dispositif selon la revendication 1, **caractérisé par le fait que** ladite pale (2) a une structure télescopique, dont la portion d'extrémité (7) s'étendant côté aval, au-delà du canal (C2) le plus court, est extensible, de longueur ajustable.

8. Dispositif selon la revendication 1, **caractérisé par le fait que** la portion d'extrémité (8) de ladite pale (2), qui s'étend côté aval, au-delà du canal (C2) le plus court, est inclinée vers le haut et vers l'extérieur d'un angle aigu α, apte à projeter avec une composante dirigée vers le haut le produit s'échappant du canal le plus long (C1).

9. Dispositif selon la revendication 8, **caractérisé par le fait que** la valeur dudit angle aigu α est réglable.

10. Dispositif selon la revendication 1, **caractérisé par le fait que** ladite cloison (5') est articulée sur la pale, de sorte que son inclinaison par rapport à la direction horizontale est ajustable.

11. Dispositif selon la revendication 1, **caractérisé par le fait que** ladite pale (2) est subdivisée en trois canaux superposés d'inégales longueurs (C1, C2, C3) séparés deux à deux par une paire de cloisons (5", 5"') horizontales, ou approximativement horizontales.

12. Dispositif selon la revendication 1, **caractérisé par le fait que** ladite pale consiste en un profilé fabriqué par découpage et pliage d'une tôle, ce profilé étant subdivisé en au moins deux canaux superposés d'inégales longueurs (C1, C2) séparés par une cloison (5) longitudinale, et possédant :
- côté amont, une partie principale dont la section droite, sensiblement constante, présente la forme approximative de la lettre E, dont la paroi (3) correspondant à la branche inférieure est fixée sur le disque (1),
- côté aval, au-delà du canal (C2) le plus court, une partie d'extrémité dont la section droite, sensiblement constante, présente la forme approximative de la lettre L, dont la branche verticale est munie, en partie supérieure, d'un rebord (400) qui est tourné du même côté que sa branche inférieure horizontale ;
ladite cloison (5) ayant sensiblement la forme d'un dièdre dont l'arête, disposée horizontalement, ou sensiblement horizontalement, est tournée vers l'avant, si on considère le sens de rotation de la pale (2), cette cloison (5) s'étendant depuis le bord de la portion d'extrémité amont de la pale (2) jusqu'à l'extrémité aval du canal (C2) le plus court.

## Patentansprüche

1. Schleuderstreuvorrichtung für ein pulvriges oder körniges Produkt auf einen Boden, wie Dünger auf einen Ackerboden, die Folgendes umfasst: eine Drehscheibe (1) mit vertikaler oder nahezu vertikaler Achse (9), Mittel zum Zuführen des Produkts, das schwerkraftbedingt in Form eines Flusses ausströmt, der derart abwärts fließt, dass er sich kontinuierlich in einer bestimmten Zone (Z) der oberen Seite der Scheibe (1) absetzt, mindestens einen Verteilerflügel (2), der an letzterer befestigt ist und von dem ein innen liegender, so genannter vorderer, Endteil dazu geeignet ist, den Materialfluss der die Scheibe speist, aufzufangen, wobei dieser Flügel dazu geeignet ist, das auf diese Weise aufgefangene pulvrige oder körnige Produkt zu seinem außen liegenden, so genannten hinteren, Ende hin zu leiten und es unter der Einwirkung der Zentrifugalkraft nach außerhalb der Scheibe zu schleudern, wobei der Flügel (2) in mindestens zwei übereinander liegende Kanäle ungleicher Länge (C1, C2) unterteilt ist, die durch eine längsgerichtete, horizontale oder annähernd horizontale Trennwand getrennt sind, **dadurch gekennzeichnet, dass** diese Trennwand (5) sich, einerseits, von dem vorderen Endrand des Flügels (2) bis zu dem hinteren Ende des kürzesten Kanals (C2) hin erstreckt und dazu geeignet ist, "im Flug", durch ihren vorderen Teil, den Materialfluss, der die Scheibe speist, zu schneiden und, anderseits, der hintere Teil des Flügels (2), der sich jenseits des kürzesten Kanals (C2) erstreckt, so ausgebildet ist, dass er für den Auswurf des Materialflusses aus letzterem kein Hindernis darstellt.

2. Vorrichtung nach Anspruch 1, **dadurch gekennzeichnet, dass** der Flügel aus einem Profil besteht, das auf der vorderen Seite einen Hauptteil aufweist, dessen im Wesentlichen konstanter Querschnitt die ungefähre Form des Buchstabens E aufweist, dessen Wand (3), die dem unteren Schenkel entspricht, auf der Scheibe (1) befestigt ist, während die Wand (4), die dem vertikalen Schenkel entspricht, in zwei übereinander liegende Seiten (40, 41) unterteilt ist, die durch die Trennwand (5) getrennt sind.

3. Vorrichtung nach Anspruch 1 oder 2, **dadurch gekennzeichnet, dass** der Flügel aus einem Profil besteht, das auf der hinteren Seite jenseits des kürzesten Kanals (C2) einen Endteil aufweist, dessen im Wesentlichen konstanter Querschnitt die ungefähre Form des Buchstabens L aufweist, dessen vertikaler Schenkel im oberen Teil mit einem Rücksprung (400) versehen ist, der zu derselben Seite hin gedreht ist wie sein unterer horizontaler Schenkel.

4. Verfahren nach Anspruch 2 oder 3, **dadurch gekennzeichnet, dass** die Trennwand (5) im Wesentlichen die Form eines V hat, dessen Kante horizontal oder im Wesentlichen horizontal angeordnet und nach vorne gedreht ist, wenn die Drehrichtung des Flügels (2) betrachtet wird.

5. Vorrichtung nach einem der Ansprüche 1 bis 4, **dadurch gekennzeichnet, dass** die hinteren Ränder (40b, 41b) der zwei Kanäle (C1, C2) versetzt und abgestuft sind, derart, dass das hintere Ende des Flügels (2) ein treppenförmiges Profil hat.

6. Vorrichtung nach einem der Ansprüche 1 bis 4, **dadurch gekennzeichnet, dass** die hinteren Ränder (40b, 41b) der zwei Kanäle (C1, C2) schräg sind, wobei die Neigung nach unten und nach außerhalb der Scheibe gerichtet ist.

7. Vorrichtung nach Anspruch 1, **dadurch gekennzeichnet, dass** der Flügel (2) eine teleskopische Struktur hat, deren Endteil (7), der sich auf der hinteren Seite jenseits des kürzesten Kanals (2) erstreckt, ausziehbar, mit anpassbarer Länge, ist.

8. Vorrichtung nach Anspruch 1, **dadurch gekennzeichnet, dass** der Endteil (8) des Flügels, der sich auf der hinteren Seite jenseits des kürzesten Kanals (2) erstreckt, nach oben und nach außerhalb um einen spitzen Winkel α geneigt ist, der dazu geeignet ist, mit einer nach oben gerichteten Komponente das Produkt, das dem längsten Kanal (C1) entweicht, auszuwerfen.

9. Vorrichtung nach Anspruch 8, **dadurch gekennzeichnet, dass** der Wert des spitzen Winkels α einstellbar ist.

10. Vorrichtung nach Anspruch 1, **dadurch gekennzeichnet, dass** die Trennwand (5') an dem Flügel angelenkt ist, derart, dass ihre Neigung relativ zu der horizontalen Richtung anpassbar ist.

11. Vorrichtung nach Anspruch 1, **dadurch gekennzeichnet, dass** der Flügel (2) in drei übereinander liegende Kanäle ungleicher Länge (C1, C2, C3) unterteilt ist, die paarweise durch ein Paar horizontaler oder annähernd horizontaler Trennwände (5", 5"') getrennt sind.

12. Vorrichtung nach Anspruch 1, **dadurch gekennzeichnet, dass** der Flügel aus einem Profil besteht, das durch Zuschneiden und Biegen eines Blechs hergestellt ist, wobei dieses Profil in mindestens zwei übereinander liegende Kanäle ungleicher Länge (C1, C2) unterteilt ist und
- auf der vorderen Seite einen Hauptteil aufweist, dessen im Wesentlichen konstanter Querschnitt die ungefähre Form des Buchstabens E aufweist, dessen Wand (3), die dem unteren Schenkel entspricht, auf der Scheibe (1) befestigt ist,
- auf der hinteren Seite, jenseits des kürzesten Kanals (C2), einen Endteil aufweist, dessen im Wesentlichen konstanter Querschnitt die ungefähre Form des Buchstabens L aufweist, dessen vertikaler Schenkel im oberen Teil mit einem Rücksprung (400) versehen ist, der zu derselben Seite hin gedreht ist wie sein unterer horizontaler Schenkel;
wobei die Trennwand (5) im Wesentlichen die Form eines V hat, dessen Kante, die horizontal oder im Wesentlichen horizontal angeordnet ist, nach vorne gedreht ist, wenn die Drehrichtung des Flügels (2) betrachtet wird, wobei sich diese Trennwand (5) von dem Rand des vorderen Endteils des Flügels (2) bis zu dem hinteren Ende des kürzesten Kanals (C2) erstreckt.

## Claims

1. Centrifugal spreader for spreading a granular and/or pulverulent product on the ground, such as fertiliser on a cultivated land, which comprises a rotary disc (1) with a vertical, or near vertical, axis (9), means for bringing the product which flows via gravity in the form of a descending flow in such a way as to be deposited continuously in a determined zone (Z) of the upper face of the disc (1), at least one distributing blade (2) fastened onto the latter and of which an internal end portion, referred to as upstream, is able to intercept the flow of product supplying the disc, this blade being adapted to channel and direct the pulverulent or granular product intercepted as such towards its external opposite end, referred to as downstream, and in order to eject it outside of the disc under the effect of centrifugal force, said blade (2) being subdivided into at least two superposed channels of unequal lengths (C1, C2) separated by a longitudinal and horizontal partition (5), or approximately horizontal, **characterised by** the fact that, on the one hand, this partition (5) extends from the upstream edge of the blade (2) to the downstream end of the shortest channel (C2), and is able to cut "on the fly", via its upstream portion, the flow of material supplying the disc and that, on the other hand, the downstream portion of the blade (2) which extends beyond the shortest channel (C2) is as such conformed that it does not hinder the ejection of the flow of material outside of the latter.

2. Device according to claim 1, **characterised by** the fact that said blade consists in a profile having, on the upstream side, a main portion of which the straight section, substantially constant, has the approximate shape of the letter E, of which the wall (3) corresponding to the lower branch is fastened on the disc (1), while the wall (4) corresponding to the vertical branch is divided into two superposed faces (40, 41) separated by said partition (5).

3. Device according to claim 1 or 2, **characterised by** the fact that said blade consists in a profile having, on the downstream side, beyond the shortest channel (C2), an end portion of which the straight section, substantially constant, has the approximate shape of the letter L, of which the vertical branch is provided, in the upper portion, with a rim (400) which is turned to the same side as its horizontal lower branch.

4. Device according to claim 2 or 3, **characterised by** the fact that said partition (5) substantially has the shape of a dihedral of which the edge is arranged horizontally, or substantially horizontally, and is turned towards the front, in consideration of the direction of rotation of the blade (2).

5. Device according to one of claims 1 to 4, **characterised by** the fact that the downstream edges (40b, 41b) of the two channels (C1, C2) are offset and tiered, in such a way that the downstream end of the blade (2) has a staircase profile.

6. Device according to one of claims 1 to 4, **characterised by** the fact that the downstream edges (40b, 41b) of the two channels (C1, C2) are oblique, with an inclination directed downwards and to the exterior of the disc.

7. Device according to claim 1, **characterised by** the fact that said blade (2) has a telescopic structure, of which the end portion (7) extending on the downstream side, beyond the shortest channel (C2), can be extended, with an adjustable length.

8. Device according to claim 1, **characterised by** the fact that the end portion (8) of said blade (2), which extends on the downstream side, beyond the shortest channel (C2), is inclined upwards and towards the exterior of an acute angle α, able to project with a component directed upwards, the product escaping from the longest channel (C1).

9. Device according to claim 8, **characterised by** the fact that the value of said acute angle α can be adjusted.

10. Device according to claim 1, **characterised by** the fact that said partition (5') is articulated on the blade, in such a way that its inclination in relation to the horizontal direction can be adjusted.

11. Device according to claim 1, **characterised by** the fact that said blade (2) is subdivided into three superposed channels of unequal lengths (C1, C2, C3) separated two-by-two by a pair of horizontal, or approximately horizontal, partitions (5", 5''').

12. Device according to claim 1, **characterised by** the fact that said blade consists of a profile manufactured via cutting and folding sheet metal, with this profile being subdivided into at least two superposed channels of unequal lengths (C1, C2) separated by a longitudinal partition (5), and having:
- on the upstream side, a main portion of which the straight section, substantially constant, has the approximate shape of the letter E, of which the wall (3) corresponding to the lower branch is fastened on the disc (1),
- on the downstream side, beyond the shortest channel (C2), an end portion of which the straight section, substantially constant, has the approximate shape of the letter L, of which the vertical branch is provided, in the upper portion, with a rim (400) which is turned towards the same side as its horizontal lower branch;
said partition (5) having substantially the shape of a dihedral of which the edge, arranged horizontally, or substantially horizontally, is turned towards the front, in consideration of the direction of rotation of the blade (2), this partition (5) extending from the edge of the upstream end of the blade (2) to the downstream end of the shortest channel (C2).
